Europäisches Patentamt

European Patent Office

Office européen des brevets

(11) Veröffentlichungsnummer: **0 017 788**
**B1**

(12) **EUROPÄISCHE PATENTSCHRIFT**

(45) Veröffentlichungstag der Patentschrift:
12.12.84

(21) Anmeldenummer: 80101489.5

(22) Anmeldetag: 21.03.80

(51) Int. Cl.³: **F 16 J 3/06, F 15 B 15/10,**
**F 16 J 10/02**

(54) Abdichtung für eine Kolben-Zylinderanordnung.

(30) Priorität: 06.04.79 CH 3260/79

(43) Veröffentlichungstag der Anmeldung:
29.10.80 Patentblatt 80/22

(45) Bekanntmachung des Hinweises auf die Patenterteilung:
12.12.84 Patentblatt 84/50

(84) Benannte Vertragsstaaten:
AT BE CH DE FR GB IT LU NL SE

(56) Entgegenhaltungen:
DE - A - 2 554 733
FR - A - 975 545
FR - A - 1 398 140
US - A - 2 027 979
US - A - 2 170 574

(73) Patentinhaber: Hydrowatt Systems Limited, Kingsgate House 115 High Holborn, London WC1V 6JE (GB)

(72) Erfinder: Frey, Bernhard, Freistrasse 2, CH-8200 Schaffhausen (CH)

(74) Vertreter: Frey, Conrad, Dr. jur., Rechtsanwalt Utoqual 39, CH-8008 Zürich (CH)

## Beschreibung

Die Erfindung bezieht sich auf eine Abdichtung für eine Kolben-Zylinderanordnung nach dem Oberbegriff des Patentanspruchs 1.

Eine Abdichtung dieser Art ist bekannt aus der US-A-2 170 574. Dort ist die erste Anschlußfläche der Stoffschlußverbindung auf der Seite des zylinderförmigen ersten Arbeitsgliedes als im Querschnittsprofil konkave, abgewinkelte Ringfläche ausgebildet. Dies hat eine stark ungleichförmige Verteilung der durch oszillierende, axiale Zugbeanspruchung im schlauchförmigen Dichtungselement verursachten Zug- und Schubspannungen im weichelastischen Material des Dichtungselementes im Bereich der genannten Stoffschlußverbindung zur Folge. Praktisch nehmen bei einer solchen Ausbildung der Anschlußfläche die im einspringenden Winkelscheitel befindlichen Bereiche der Stoffschlußverbindung kaum an der Kraftübertragung teil, so daß die äußeren Randbereiche der Verbindung praktisch allein die Zug- und Schubspannungen aufnehmen müssen und daher hohen Spannungskonzentrationen unterliegen. Hierdurch und durch den stark inhomogenen Spannungsverlauf im benachbarten Weichmaterial des Dichtungselementes wird die Dauerwechselfestigkeit der Verbindung und des Weichmaterials beeinträchtigt.

Eine weitere Abdichtung der vorgenannten Art ist bekannt aus der FR-A-975 545. Dort sind ebenfalls Stoffschlußverbindungen für den Anschluß schlauchförmiger Dichtungselemente an erste bzw. zweite Arbeitsglieder vorgesehen, und zwar mit teils wiederum im Querschnittsprofil konkav abgewinkelten und teils im wesentlichen zylindrischen Anschlußflächen eines festen, ringförmigen Verbindungselementes zu einem napfartigen bzw. zylinderförmigen Arbeitsglied. Für die konkaven Profilquerschnitte der Anschlußfläche gelten die vorstehend erläuterten Probleme. Für die im wesentlichen zylindrischen Anschlußflächen, deren Axialrichtung mit der Haupt-Dehnrichtung des schlauchförmigen Dichtungselementes übereinstimmt, ergeben sich ebenfalls ungleichförmige Schubspannungsverteilungen, weil die von der Schlauchanschlußseite axial weiter entfernten Flächenbereiche infolge der Krafteinleitung vom Schlauch her über längere Dehnbereiche entlastet werden und daher an der Gesamt-Kraftübertragung nur wenig teilnehmen.

Aufgabe der Erfindung ist daher die Schaffung einer Abdichtung für eine Kolben-Zylinderanordnung der eingangs erwähnten Art, die sich durch verminderte Schub- und Zugspannungskonzentrationen im Bereich der Stoffschlußverbindung zwischen dem schlauchförmigen Dichtungselement und einem Arbeitsglied oder einem zwischengeschalteten Anschlußelement und somit durch verbesserte Dauerwechselfestigkeit der Verbindung und des Dichtungselementes selbst auszeichnet. Die erfindungsgemäße Lösung dieser Aufgabe kennzeichnet sich bei einer solchen Abdichtung durch die Merkmale des Patentanspruchs 1.

Damit ergibt sich ein weitgehend stetiger, von starken Spannungsgradienten freier Kraftfluß in der Stoffschlußverbindung und im Anschlußbereich des schlauchförmigen Dichtungselementes, insbesondere auch ein stetiger Übergang zwischen den mittleren Bereichen der Anschlußfläche mit ihren vergleichsweise hohen Schub- und Zugspannungen zu den Randbereichen der Anschlußfläche, in denen die Spannungen abfallen. Auf diese Weise lassen sich ferner schädliche Kerbwirkungen im Anschlußbereich des weichelastischen Materials weitgehend vermeiden. Außerdem kann die Anschlußfläche bei gleichen Außenabmessungen der Anordnung vergrößert und damit auch die mittlere Schub- und Zugspannungsbelastung der Stoffschlußverbindung vermindert werden, indem die Anschlußfläche vergleichsweise weit um das konvex gekrümmte Ringprofil in Axial- und gegebenenfalls auch in Radialrichtung nach außen herumgezogen wird.

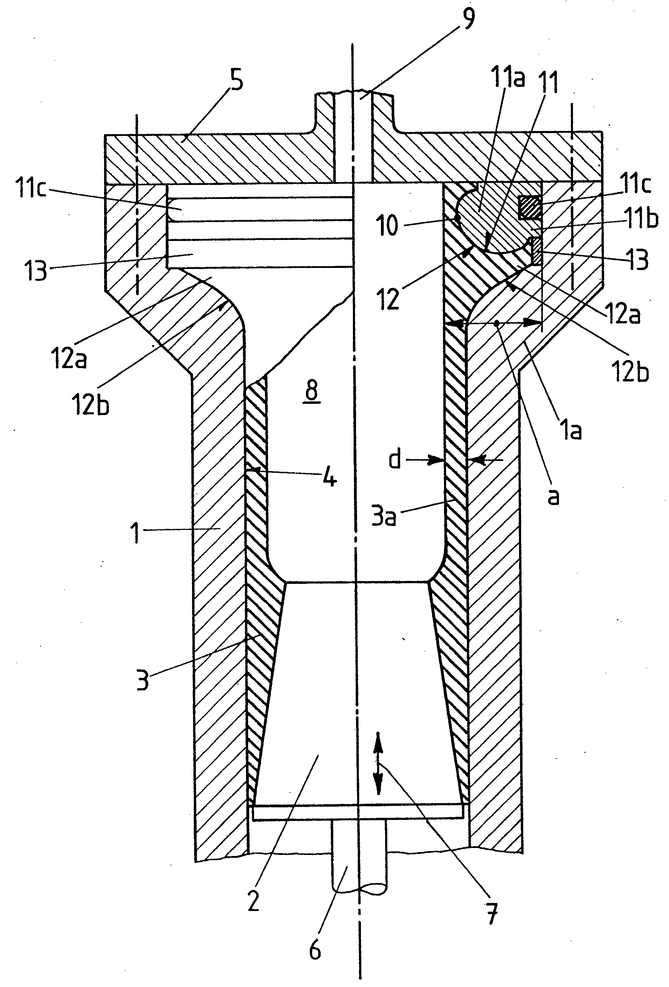

Weitere Merkmale und Vorteile der Erfindung werden anhand des in der Zeichnung veranschaulichten Ausführungsbeispiels erläutert, die einen schematischen Axialschnitt eines schlauchförmigen Dichtungselementes mit Anschlußbereich zu einem zylindrischen Arbeitsglied mit Stützwandung wiedergibt.

Im Beispielsfall ist ein Zylinder 1 als erstes Arbeitsglied und ein darin angeordneter Kolben 2 als zweites Arbeitsglied vorgesehen. Ein schlauchförmiges Dichtungselement 3, z. B. aus hochelastischem und vulkanisationsfähigem Gummi bestehend, stellt einen nachgiebigen, dichtenden Abschluß zwischen beiden Arbeitsgliedern her und stützt sich mit seiner Außenseite über eine nicht dargestellte Schmiermittelschicht an einer inneren Stützfläche 4 des Zylinders 1 ab. Nach oben wird der Zylinder 1 durch einen angeschraubten Deckel 5 abgeschlossen, während der Kolben 2 über ein nicht weiter dargestelltes Antriebsglied 6 im Sinne des Doppelpfeils 7 bezüglich des Zylinders 1 in oszillierende Bewegung versetzt wird. Im Innern des schlauchförmigen Dichtungselementes 3 ergibt sich somit ein pulsierender Arbeitsraum 8, der z. B. über eine Anschlußleitung 9 mit nicht dargestellten Zuström- und Abströmventilen eines Hydrauliksystems verbunden ist. Pumpen oder Motoren mit in dieser Weise abgedichteten Zylinder-Kolbenanordnungen werden vor allem in Hochdrucksystemen und bei der Förderung von hermetisch abzuschließenden Medien verwendet.

Die Verbindungen des schlauchförmigen Dichtungselementes 3 mit den beiden Arbeitsgliedern unterliegen in den bevorzugten Anwendungsfällen mit hohen Drücken und insbesondere bei hinzukommenden hohen Arbeitsfrequenzen mit entsprechender Wechselverformungen starken Beanspruchungen. Dies gilt vor allem im Hinblick auf die Übertragung der im Schlauchkörper auftretenden, axialen Zugspannungen auf die Arbeitsglieder. Während nun für die Vergrößerung der Verbindungsfläche zwischen Dichtungselement und Kolben 2 — wie in der Zeichnung veranschaulicht — eine vergleichsweise große axiale Baulänge ohne weiteres verfügbar ist, trifft dies für die Verbindung mit dem die Stützwandung 4 bildenden Zylinder 1 nicht ohne weiteres zu, wenn nicht der Totanteil des Arbeitsraumes unerwünscht vergrößert werden soll. Die vergleichsweise unschwierige Vergrößerung der kolbenseitigen Anschlußflächen erlaubt daher geringe spezifische Flächenbelastungen, weshalb stoffschlüssige Verbindungen an dieser Stelle bereits vorgeschlagen wurden, nicht aber an der Verbindungsstelle zwischen Dichtungselement und Stützwandung bzw. Zylinder. Erfindungsgemäß wurde diese Anschauung jedoch durch praktische Ausführungen und Versuche entkräftet, insbesondere unter Verwendung geeigneter, vulkanisationsfreundlicher Werkstoffe für die zylinderseitige Anschlußfläche sowie unter Anwendung von Formgebungen der Anschlußfläche, die einen günstigen Kraftfluß mit geringen Spannungsgradienten innerhalb des Dichtungsmaterials und innerhalb der Anschlußflächen ergeben. In der Zeichnung sind solche Merkmale veranschaulicht.

Hier ist eine stoffschlüssige Verbindung 10 zwischen einer zylinderseitigen toroidförmigen Festkörperanschlußfläche 11 und einer dichtungsseitigen Weichkörperanschlußfläche 12 gebildet, im Falle von Gummi als Dichtungsmaterial vorzugsweise durch Vulkanisation. Der zylinderseitige Festkörper dieser Verbindung ist als ringartiges Zwischenelement 11a ausgebildet, das vom Zylinder 1 getrennt, jedoch mit diesem an einem radial nach außen vorstehenden Randabschnitt 11b durch axiale Verspannung zwischen dem Deckel 5 und einem Distanzring 13 formschlüssig verbunden ist. Auf diese Weise können für die Festkörperanschlußfläche 11 einerseits und für die Stützwandung 4 bzw. den Zylinder 1 andererseits ohne gegenseitige Rücksicht optimale Werkstoffe gewählt werden. Ferner wird durch diese konstruktive Trennung die Bearbeitung und verbindungsgerechte Formgebung der Anschlußfläche 11 erleichtert oder überhaupt erst ermöglicht, wie die mit Hinterschneidung herzustellende, radial innen sowie axial beiderseits im Querschnitt konvex gekrümmte Ringform veranschaulicht. Diese Krümmung der Anschlußfläche 11, welche das Ringprofil weitgehend umgreift, führt zu einem allmählichen Übergang zwischen den Stellen maximaler Zug- und Schubspannung zu den Randbereichen der Anschlußfläche, wo die Spannungen auf Null abfallen.

Ein stetiger Ausgleich zwischen dem Zugspannungsbereich im zylindrischen Teil 3a des Dichtungselementes 3 zum mehr oder weniger durch Schubspannungen dominierten Übergangsabschnitt 12a wird durch die dargestellte Formgebung mit einem als Hohlkehle ausgebildeten Zwischenabschnitt 12b begünstigt. Der Übergangsabschnitt 12a weist eine Radialabmessung a auf, die ein Mehrfaches der Schlauchwandstärke d beträgt. Dies ermöglicht eine reichliche Dimensionierung der Anschlußflächen ohne Vergrößerung der axialen Baulänge und damit des Arbeitsraum-Totanteils. Die entsprechend geringen Krümmungsradien der Anschlußflächen vermeiden die für Wechselbeanspruchung besonders gefährliche Kerbwirkung und vermindern allgemein die Spannungsgradienten im Spannungsfeld innerhalb des weichelastischen Dichtungsmaterials.

Übrigens kann insbesondere im Interesse einer teilweisen Zugentlastung der Stoffschlußverbindung 10 im Bereich ihrer axialen Anschlußflächenteile eine Druckverspannung des radial vorstehenden Übergangsabschnitts 12a zwischen dem ringförmigen Zwischenelement 11a und der Schulter 1a des Zylinders 1 durch entsprechende Bemessung des Distanzringes 13 eingestellt werden. Dies hat für die Dauerstandfestigkeit der Verbindung u. U. große Bedeutung.

Für eine zuverlässige Abdichtung zwischen dem Arbeitsraum 8 und dem gegebenenfalls mit Schmiermittel gefüllten Spaltraum zwischen dem Dichtungselement 3 und der Stützfläche 4 unabhängig von der axialen Verspannung des ringförmigen Zwischenelementes 11a und des Distanzringes 13 ist im Beispielsfall an der Außenseite des Zwischenelementes 11a eine Zwischenabdichtung 11c — hier in Form eines O-Ringes — innerhalb einer Umfangsnut angeordnet. Diese Zwischenabdichtung wirkt gegen die Innenfläche der das Element 11a und den Übergangsabschnitt 12a sowie den Distanzring 13 aufnehmenden Ausnehmung des Zylinders 1.

**Patentansprüche**

1. Abdichtung für eine Kolben-Zylinderanordnung mit wenigstens zwei relativ zueinander oszillierenden Arbeitsgliedern (1, 2) zur Bildung eines pulsierenden Arbeitsraumes und mit einem wenigstens teilweise aus weichelastischem Material bestehenden, schlauchförmigen Dichtungselement (3), das sich unmittelbar oder über ein Schmiermittel an einer Stützfläche (4) eines Arbeitsgliedes (1) abstützt und einerseits mit dem diese Stützfläche (4) bildenden ersten Arbeitsglied (1) sowie andererseits mit dem relativ zu der Stützfläche (4) bewegten zweiten Arbeitsglied (2) in Verbindung steht, wobei zwischen dem schlauchförmigen Dichtungselement (3) und dem die Stützfläche (4) bildenden ersten Arbeitsglied (1) eine stoffschlüssige, insbesondere durch Vulkanisation gebildete Verbindung (10) mit einer ersten Anschlußfläche (11) eines auf der Seite des ersten Arbeitsgliedes (1) befindlichen Festkörpers (11a) sowie mit einer durch das weichelastische Material des schlauchförmigen Dichtungselementes (3) gebildeten zweiten Anschlußfläche (12) vorgesehen ist, dadurch gekennzeichnet, daß die erste Anschlußfläche (11) der stoffschlüssigen Verbindung (10) insgesamt im wesentlichen konvex toroidförmig ausgebildet ist.

2. Abdichtung nach Anspruch 1, dadurch gekennzeichnet, daß die erste Anschlußfläche (11) für die stoffschlüssige Verbindung (10) in an sich bekannter Weise an einem ringartigen Zwischenelement (11a) gebildet ist, welches seinerseits mit dem die Stützfläche (4) bildenden Arbeitsglied (1) formschlüssig verbunden ist.

3. Abdichtung nach Anspruch 2, dadurch gekennzeichnet, daß die erste Anschlußfläche (11) das Querschnittsprofil des ringartigen Zwischenelementes (11a) in Axial- und Radialrichtung umgreift.

4. Abdichtung nach Anspruch 3, dadurch gekennzeichnet, daß das ringartige Zwischenelement (11a) für die stoffschlüssige Verbindung (10) mit einem radial nach außen über den Anschlußbereich des schlauchförmigen Dichtungselementes (3) vorstehenden Randabschnitt (11b) versehen ist und daß dieser Randabschnitt in einer Ausnehmung des zylindrisch ausgebildeten ersten Arbeitsgliedes (1) formschlüssig sowie vorzugsweise mit einer weichelastischen Zwischenabdichtung (11c) eingefaßt ist.

5. Abdichtung nach einem der vorangehenden Ansprüche, dadurch gekennzeichnet, daß das schlauchförmige Dichtungselement (3) im Bereich seiner Anschlußfläche (12) einen Übergangsabschnitt (12a) von im Vergleich zur Schlauchwandstärke (d) größerer Radialabmessung (a) aufweist.

6. Abdichtung nach Anspruch 5, dadurch gekennzeichnet, daß zwischen dem Übergangsabschnitt (12a) des schlauchförmigen Dichtungselementes (3) und dem zylindrischen Schlauchkörper (3a) ein als Hohlkehle ausgebildeter Zwischenabschnitt (12b) vorgesehen ist.

7. Abdichtung nach Anspruch 5 oder 6, dadurch gekennzeichnet, daß der radial verstärkte Übergangsabschnitt (12a) des schlauchförmigen Dichtungselementes (3) zwischen benachbarten Festkörperabschnitten (1a, 11a), vorzugsweise axial, unter Druck verspannt ist.

## Claims

1. Sealing device for a piston-cylinder assembly having at least two working elements (1, 2) reciprocating relative to each other and forming a pulsating working space, and also having a hose-like sealing element (3) consisting at least partially of flexible material, which is supported directly or via a lubricant on a supporting surface (4) of a working element (1) and which is connected on one side to the first working element (1) forming the supporting surface (4), and on the other side to the second working element (2), which is moved relative to the supporting suface (4), provision being made for a bonded connection (10), produced in particular by vulcanization, between said hose-like sealing element (3) and said first working element (1) forming the supporting surface (4), said bonded connection comprising a first connection facing (11) of a solid body (11a) on the side of the first working element (1), and a second connection facing (12) formed by the flexible material of said hose-like sealing element (3), characterized in that the first connection facing (11) of the bonded connection (10) is in general and substantially of a convex toroidal shape.

2. Sealing device according to claim 1, characterized in that the first connection facing (11) of the bonded connection (10) is formed on an annular-type intermediate element (11a) in a manner known per se, this intermediate element (11a) in turn being joined by a form-fit with the first working element (1) forming said supporting surface (4).

3. Sealing device according to claim 2, characterized in that the first connection facing (11) encompasses the cross-section profile of the annular type intermediate element (11a) in the axial and radial direction.

4. Sealing device according to claim 3, characterized in that the annular-type intermediate element (11a) for said bonded connection (10) is provided with an edge section (11b) projecting radially outwards over the connection region of the hose-like sealing element (3), and this edge section is enclosed with a form-fit in a recess of the cylindrically shaped first working element (1) and preferably with a flexible intermediate packing (11c).

5. Sealing device according to one of the foregoing claims, characterized in that the hose-like sealing element (3) has a transitional section (12a) in the region of its connection facing (12) having a larger radial dimension (a) in comparison with the thickness of the hose wall (d).

6. Sealing device according to claim 5, characterized in that an intermediate section (12b) in the form of a groove is provided for between the transitional section (12a) of the hose-like sealing element (3) and the cylindrical hose body (3a).

7. Sealing device according to claim 5 or 6, characterized in that the radially reinforced transitional section (12a) of the hose-like sealing element (3) is restrained under pressure between adjacent solid sections (1a, 11a), preferably axially.

## Revendications

1. Dispositif d'étanchéité pour ensemble piston et cylindre avec au moins deux éléments actifs (1, 2) qui oscillent l'un par rapport à l'autre, créant ainsi une chambre de travail à pulsation et comportant un élément d'étanchéité (3) en forme de tuyau flexible consistant, du moins en partie, en un matériau souple reposant directement ou par l'intermédiaire d'un lubrifiant sur une surface d'appui (4) d'un élément actif (1) et se trouvant en contact d'une part avec ce premier élément actif (1) formant la surface d'appui (4) et d'autre part le second élément actif (2), en mouvement relatif par rapport à la surface d'appui (4), une liaison (10) étanche, formée notamment par vulcanisation, étant prévue entre l'élément d'étanchéité (3) en forme de tuyau flexible et le premier élément actif (1) formant la surface d'appui (4) et qui présente une première face de raccorde-ment (11) sur un corps solide (11a) situé du côté du premier élément actif (1) et une deuxième face de raccordement (12) sur le matériau souple de l'élément d'étanchéité (3) en forme de tuyau flexible caractérisé par la forme essentiellement convexe et torique de l'entière première face de raccordement (11) de la liaison étanche (10).

2. Dispositif d'étanchéité selon revendication 1, caractérisé par le fait que la première face de raccordement (11) pour la liaison étanche (10) est formée d'un élément intermédiaire annulaire (11a) relié pour sa part de façon étanche, à l'élément actif (1) formant la surface d'appui (4).

3. Dispositif d'étanchéité selon revendication 2, caractérisé par le fait que la première face de raccordement (11) enveloppe en direction axiale autant que radiale la section transversale de l'élément intermédiaire annulaire (11a).

4. Dispositif d'étanchéité selon revendication 3, caractérisé par le fait que l'élément intermédiaire annulaire (11a) pour la liaison étanche (10) est pourvu d'un rebord périphérique (11b) s'étendant vers l'extérieur au-delà de la zone de raccordement de l'élément d'étanchéité (3) en forme du tuyau flexible et par le fait que ce rebord est entouré d'une élément intermédiaire d'étanchéité (11c) de préférence souple, formant liaison étanche à l'intérieur d'un creux aménagé dans le premier élément actif, de forme cylindrique.

5. Dispositif d'étanchéité selon l'une des revendications ci-dessus caractérisé par le fait que l'élément d'étanchéité (3) en forme de tuyau flexible possède dans la zone de sa face de raccordement (12) une section de transition (12a) présentant une dimension radiale (a) nettement supérieure à l'épaisseur de paroi (d) du flexible.

6. Dispositif d'étanchéité selon revendication 5, caractérisé par le fait qu'un section intermédiaire (12b) en forme de gorge concave est prévue entre la section de transition (12a) de l'élément d'étanchéité en forme de tuyau flexible (3) et le corps tubulaire cylindrique (3a).

7. Dispositif d'étanchéité selon revendication 5 ou 6, caractérisé par le fait que la section de transition renforcée radialement (12a) de l'élément d'étanchéité en forme de tuyau flexible est contraint sous pression, de préférence axialement, entre les sections solides adjacentes (1a, 11a).